(19) Europäisches Patentamt / European Patent Office / Office européen des brevets

(11) **EP 3 409 052 B1**

(12) **EUROPEAN PATENT SPECIFICATION**

(45) Date of publication and mention
of the grant of the patent:
**21.08.2019 Bulletin 2019/34**

(51) Int Cl.:
**H04W 52/02** *(2009.01)*      *H04W 84/04* *(2009.01)*
**H04W 24/02** *(2009.01)*

(21) Application number: **16702384.5**

(22) Date of filing: **27.01.2016**

(86) International application number:
**PCT/EP2016/051688**

(87) International publication number:
**WO 2017/129238 (03.08.2017 Gazette 2017/31)**

(54) **CONSUMPTION REPORTING FOR ENERGY-SAVING MODE OF ACCESS NODE**

MELDUNG DES VERBRAUCHS FÜR ENERGIESPARMODUS EINES ZUGANGSKNOTENS

GÉNÉRATION DE RAPPORT DE CONSOMMATION POUR MODE D'ÉCONOMIE D'ÉNERGIE DE NOEUD D'ACCÈS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.12.2018 Bulletin 2018/49**

(73) Proprietor: **Telefonaktiebolaget LM Ericsson (PUBL)**
**164 83 Stockholm (SE)**

(72) Inventors:
• **MAGNUSSON, Björn**
**582 46 Linköping (SE)**
• **HUBINETTE, Ulf**
**587 29 Linköping (SE)**
• **LANDSTEDT, Meta**
**584 37 Linköping (SE)**
• **LEINONEN, Esko**
**616 34 Åby (SE)**
• **LOBORG, Peter**
**585 98 Linköping (SE)**
• **PETERSEN, Robert**
**582 46 Linköping (SE)**

(74) Representative: **Ericsson**
**Patent Development**
**Torshamnsgatan 21-23**
**164 80 Stockholm (SE)**

(56) References cited:
**EP-A1- 2 787 777      US-A1- 2015 156 714**
**US-B1- 8 515 410**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to methods for managing a cellular radio network and to corresponding devices.

Background

In cellular radio networks, e.g., as specified by 3GPP (3rd Generation Partnership Project), it is known to provide enhanced capacity by utilizing multiple access nodes with overlapping coverage areas (often referred to as "cells"). For example, one or more small cells may be provided within a coverage area of a macro cell, to provide enhanced capacity in certain parts of the macro cell.

However, providing such overlapping coverage areas typically comes at the cost of increased power consumption (as compared to basic coverage without substantial overlap of coverage areas). Further, the actually required capacity may vary and the enhanced capacity provided by the overlapping coverage areas might not be needed all the time. In view of this situation, mechanisms are provided which allow for temporarily deactivating a cell while it is not needed for providing enhanced capacity. For example, 3GPP TS 36.423 V13.2.0 (2015-12) describes the possibility of deactivating a cell and also reporting the activation/deactivation status via an interface termed as "X2" to a neighboring access node.

However, from a network perspective management of activation and deactivation of cells for energy saving purposes is a complex task since the required capacity may vary over time and location. Further, since deactivation of a cell may cause increased load on neighboring or overlapping cells, also the energy saving effect is difficult to assess.

Accordingly, there is a need for techniques which allow for efficiently managing a cellular radio of a radio device to a cellular radio network, in particular with respect to energy saving functionalities.

EP 2 787 777 A1 describes energy saving management in a heterogeneous mobile communications system in which switching of a small cell between an on state and an off state can be controlled by a base station of a macro cell, using reported information on power consumption of a base station of the small cell.

Summary

The present invention provides a method according to claim 1, an access node according to claim 11, a system according to claim 13, and a computer program or computer program product according to claim 15. The dependent claims define further embodiments of the invention.

Portions of the description relating to a management node and method therein no longer fall under the scope of the amended claims and are maintained merely as examples useful to understand the invention.

According to an embodiment of the invention, a method of managing a cellular radio network is provided. According to the method, an access node controls switching of a further access node to an energy saving mode. Further, the access node monitors energy consumption of the access node. Further, the access node receives a report from the further access node. The report indicates energy consumption of the further access node while the further access node was in the energy saving mode. Based on the monitored energy consumption of the access node and the indicated energy consumption of the further access node, the access node determines energy saving information representing energy saving associated with the switching of the further access node to the energy saving mode.

According to a further embodiment of the invention, an access node for a cellular radio network is provided. The access node is configured to control switching of a further access node to an energy saving mode. Further, the access node is configured to monitor energy consumption of the access node. Further, the access node is configured to receive a report from the further access node. The report indicates energy consumption of the further access node while the further access node was in the energy saving mode. Further, the access node is configured to determine, based on the monitored energy consumption of the access node and the indicated energy consumption of the further access node, energy saving information representing energy saving associated with the switching of the further access node to the energy saving mode.

According to a further embodiment of the invention, a computer program or computer program product is provided, e.g., in the form of a non-transitory storage medium, which comprises program code to be executed by at least one processor of an access node of a cellular radio network. Execution of the program code causes the access node to control switching of a further access node to an energy saving mode. Further, execution of the program code causes the access node to monitor energy consumption of the access node. Further, execution of the program code causes the access node to receive a report from the further access node. The report indicates energy consumption of the further access node while the further access node was in the energy saving mode. Further, execution of the program code causes the access node to determine, based on the monitored energy consumption of the access node and the indicated energy consumption of the further access node, energy saving information representing energy saving associated with the switching of the further access node to the energy saving mode.

Details of such embodiments and further embodiments will be apparent from the following detailed description of embodiments.

Brief Description of the Drawings

Fig. 1 schematically illustrates a cellular radio network environment in which connectivity is controlled according to an embodiment of the invention.

Fig. 2 shows a diagram of representing variation of a load on an access node and load thresholds for controlling, in accordance with an embodiment of the invention, switching of another access node to an energy saving mode.

Fig. 3 shows a message flow for illustrating an example of processes according to an embodiment of the invention.

Fig. 4 shows a flowchart for schematically illustrating a method according to an embodiment of the invention, which may be implemented by an access node.

Fig. 5 shows a block diagram for illustrating functionalities of an access node according to an embodiment of the invention.

Fig. 6 shows a flowchart for schematically illustrating a further method according to an embodiment of the invention, which may be implemented by an access node.

Fig. 7 shows a block diagram for illustrating functionalities of a further access node as used according to an embodiment of the invention.

Fig. 8 shows a flowchart for schematically illustrating a further method which may be implemented by a management node.

Fig. 9 shows a block diagram for illustrating functionalities of a management node.

Fig. 10 schematically illustrates exemplary structures of an access node according to an embodiment of the invention.

Fig. 11 schematically illustrates exemplary structures of a management node.

Detailed Description of Embodiments

In the following, concepts in accordance with exemplary embodiments of the invention will be explained in more detail and with reference to the accompanying drawings. The illustrated embodiments relate to managing a cellular radio network, specifically with respect to switching one or more access nodes into an energy saving mode. The cellular radio network may for example be based on the LTE (Long Term Evolution) technology specified by 3GPP. However, it is to be understood that other cellular radio technologies could be utilized as well, e.g., the UMTS (Universal Mobile Telecommunications System) technology or a 5G (5th Generation) cellular radio technology.

In the illustrated concepts, it is assumed that a first access node controls switching of a second access node to an energy saving mode. This may useful in scenarios where the first access node is responsible for providing basic coverage in a certain coverage area, and the second access node provides additional capacity in a certain part of this coverage area. For example, the first access node may serve a macro cell, and the second access node may serve a small cell within the coverage area of this macro cell.

In the above-mentioned scenarios, the first access node typically has access to information which allows for assessing whether the additional capacity provided by the second access node is needed. Based on this information, the first access node may thus automatically control whether to switch the second access node to and from the energy saving mode. For example, the first access node may measure its load, e.g., in terms of a processor load or interface load, and switch the second access node to the energy saving mode if this load is below a threshold, because when the load is below the threshold, the first access node is capable of providing sufficient performance for serving all radio devices within its coverage area, and the additional capacity provided by the second access node is thus not required.

On the other hand, if the load increases above a threshold, the first access node may wake up the second access node from the energy saving mode, because the additional capacity provided by the second access node is needed.

In the illustrated concepts, the first access node monitors its own energy consumption. Further, the first access node receives, from the second access node, a report indicating energy consumption of the second access node. On the basis of its own energy consumption and the reported energy consumption of the second access node, the first access node then determines energy saving information which represents energy saving associated with the switching of the second access node to the energy saving mode. Based on this energy saving information, it is possible to assess whether switching of the second access node to the energy saving mode is useful from an energy-saving perspective. In this way, it can for example be taken into account that switching the second access node to the energy saving mode may at the same time increase the load on the first access node, thereby reducing or even eliminating any energy-saving effect. The first access node may then rather decide not to switch the second access node to the energy saving mode. Further, in some situations the energy-saving associated with the switching of the second access node to the energy-saving mode may be very small, e.g., below a certain threshold, so that it is preferable if the first access node decides not to switch the second access node into the energy-saving mode. In other situations, the energy-saving information may indicate that high energy saving, e.g., above a certain threshold, can be achieved by switching the second access node to the energy-saving mode, so that it is preferable if the first access node decides to switch the second access node to the energy-saving mode even though the additional capacity provided by the second access node would be useful. A corresponding behavior may for example be implemented by adjusting the above-mentioned load thresholds for deciding whether to switch the second access node to or from the energy-saving mode.

The energy-saving mode of the second access node may be based on switching off certain parts of the second access node. For example, radio functionalities of the second access node could be deactivated in the energy saving mode. Further, also other functionalities may be deactivated in the energy saving mode, such as certain control functionalities, e.g., for controlling connection of radio devices to the second access node. In some scenarios, only functionalities needed for waking up the second access node from the energy-saving mode by the first access node may be active in the energy-saving mode, while all other functionalities are deactivated. In view of these characteristics, the energy saving mode may also be referred to as "sleep mode".

The energy consumption reported by the second access node includes energy consumption of the second access node while the second access node was in the energy saving mode. The energy consumption of the second access node may be measured by an energy meter associated with the second access node. The energy meter may remain operative in the energy-saving mode of the second access node and indicate the energy consumption during the energy saving mode to the second access node after the second access node wakes up from the energy-saving mode. The energy meter may be clamped to a main power input of the second access node, thus allowing for measurement of all contributions to the energy consumption of the second access node. Further, also the energy consumption of the second access node while the second access node was not in the energy-saving mode may be measured and reported.

The first access node may monitor its own energy consumption in a similar manner. That is to say, the energy consumption of the first access node may be measured by an energy meter associated with the first access node, e.g., clamped to a main power input of the first access node. The monitored energy consumption of the first access node may include energy consumption of the first access node while the second access node was in the energy-saving mode. Further, the monitored energy consumption of the first access node may include energy consumption of the first access node while the second access node was not in the energy saving mode.

The first access node utilizes the determined energy-saving information locally for controlling the switching of the second access node to the energy saving mode. Further, the first access node may also indicate the energy saving information to a management node of the cellular radio network. The management node may then further evaluate the energy-saving information, possibly also taking into account energy-saving information from other access nodes. Depending on the energy saving information, the management node may determine management information for controlling the switching of the second access node to the energy saving mode and indicate the management information to the first access node. The first access node may then control the switching of the second access node to the energy saving mode depending on the management information provided by the management node. For example, the management information may define the above-mentioned load thresholds for switching the second access node to or from the energy saving mode.

The above-mentioned reporting of energy consumption may thus be utilized for efficiently managing switching of one or more access nodes to the energy saving mode.

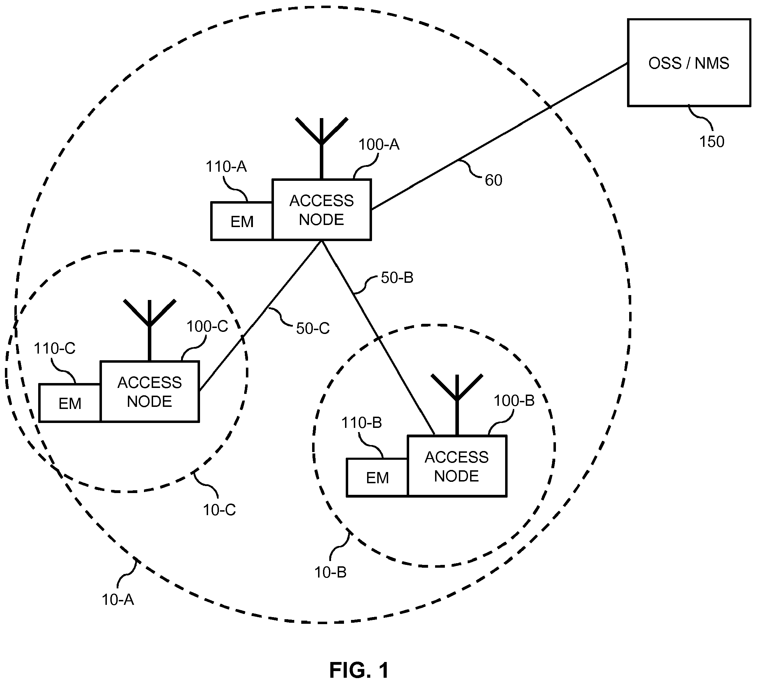

Fig. 1 schematically illustrates an exemplary scenario in which the above-described concepts may be applied. Specifically, Fig. 1 illustrates access nodes 100-A, 100-B, 100-C of the cellular radio network. Further, Fig. 1 also illustrates a management node 150 which implements management functionalities for the access nodes 100-A, 100-B, 100-C. The access nodes 100-A, 100-B, 100-C may correspond to base stations of the cellular radio network, e.g., to eNBs of the LTE technology. The management node 150 may correspond to an Operations Support System (OSS) and/or Network Management System (NMS) of the cellular radio network.

As illustrated, each of the access nodes 100-A, 100-B, 100-C serves a corresponding coverage area 10-A, 10-B, 10-C of the cellular radio network. These coverage areas may also be referred to as cells of the cellular radio network. In such coverage area 10-A, 10-B, 10-C a radio device, often referred to as UE (user equipment), may connect via the corresponding access node 100-A, 100-B, 100-C to the cellular radio network. In the scenario of Fig. 1, the access node 100-A serves the coverage area 10-A, the access node 100-B serves the coverage area 10-B, and the access node 100-C serves the coverage area 100-C.

As further illustrated, the coverage areas 10-B and 10-C are at least partially overlapped by the coverage area 10-A. Specifically, the coverage areas 10-B and 10-C correspond to small coverage areas located within the coverage area 10-A. The coverage area 10-B is located completely within the coverage area 10-A, i.e., is fully overlapped by the coverage area 10-A. The coverage area 10-C extends beyond the coverage area 10-A, i.e., is only partially overlapped by the coverage area 10-A. The coverage area 10-A is assumed to provide basic coverage in the coverage area 10-A, while the coverage areas 10-B, 10-C are be utilized for enhancing the capacity of the cellular radio network in certain parts of the coverage area 10-A. The access node 100-A may thus also be referred to as a "coverage node", whereas the access nodes 100-B, 100-C may be referred to as "capacity nodes". Here, it should be noted that the additional capacity provided by the coverage areas 10-B, 10-C may be utilized for serving a higher number of radio devices and/or for providing increased performance to certain radio devices.

As further illustrated, an energy meter (EM) 110-A, 110-B, 110-C is provided for each of the access nodes 100-A, 100-B, 100-C. The energy meter 110-A is associated with the access node 100-A, the energy meter 110-B is associated with the access node 100-B, and the energy meter 110-C is associated with the access node 100-C. The energy meters 110-A, 110-B, 110-C may be external devices clamped to a main power input (AC or DC) of the respective access node 100-A, 100-B, 100-C and be coupled to the respective access node 100-A, 100-B, 100-C through an interface which allows for indicating results of measurements performed by the energy meter 110-A, 110-B, 110-C to the respective access node 100-A, 100-B, 100-C. However, it is to be understood that in some implementations the energy meter 110-A, 110-B, 110-C could also be implemented as an internal component of the corresponding access node 100-A, 100-B, 100-C. Each of the energy meters 110-A, 110-B, 110-C is assumed to measure energy consumption of the corresponding access node 100-A, 100-B, 100-C, e.g., in terms of utilized input power integrated over time.

As further illustrated, the access node 100-B is connected by an interface 50-B to the access node 100-B. Similarly, the access node 100-C is connected by an interface 50-C to the access node 100-A. The interfaces 50-B, 50-C may for example correspond to the X2 interface of the LTE technology, e.g., as specified in 3GPP TS 36.423 V13.2.0 (2015-12). In the illustrated concepts, it is assumed that the access node 100-A controls switching of the access node 100-B to or from the energy saving mode by sending corresponding control information via the interface 50-B to the access node 100-B. Similarly, the access node 100-A controls switching of the access node 100-C to or from the energy saving mode by sending corresponding control information via the interface 50-C to the access node 100-C. The control information may for example include a command for switching the respective access node 100-B, 100-C to the energy saving mode or a command for waking up the respective access node 100-B, 100-C from the energy saving mode. Further, the access node 100-B may utilize the interface 50-B for reporting its energy consumption, as measured by the energy meter 110-B, to the access node 100-A. Similarly, the access node 100-C may utilize the interface 50-C for reporting its energy consumption, as measured by the energy meter 110-C, to the access node 100-A. The reported energy consumption may distinguish between the energy consumption while the respective access node 100-B, 100-C was in the energy saving mode and the energy consumption while the respective access node 100-B, 100-C was not in the energy saving mode. The access node 100-B, 100-C may report its energy consumption when waking up from the energy saving mode, when switching to the energy saving mode, but also at other times, e.g., at regular time intervals while not in the energy saving mode.

The access node 100-A utilizes the reported energy consumption and its own energy consumption, as measured by the energy meter 110-A, for determining energy saving information associated with the switching the of the respective access node 100-B, 100-C to the energy saving mode. For this purpose, the access node 100-A may distinguish between its own energy consumption while the respective access node 100-B, 100-C was in the energy saving mode and its own energy consumption while the respective access node 100-B, 100-C was not in the energy saving mode.

For example, when designating, for a certain time interval, the energy consumption of the access node 100-B while in the energy saving mode with $C_{B-ES}$, the energy consumption of the access node 100-B while not in the energy saving mode with $C_{B-NES}$, the energy consumption of the access node 100-A while the access node 100-B was in the energy saving mode with $C_{A-BES}$, and the energy consumption of the access node 100-A while the access node 100-B was not in the energy saving mode with $C_{A-BNES}$, the energy saving associated with switching of the access node 100-B to the energy saving mode could be determined as

$$ES_B = (C_{B-NES} - C_{B-ES}) - (C_{A-BNES} - C_{A-BES}). \tag{1}$$

Similarly, when designating, for a certain time interval, the energy consumption of the access node 100-C while in the energy saving mode with $C_{C\text{-}ES}$, the energy consumption of the access node 100-C while not in the energy saving mode with $C_{C\text{-}NES}$, the energy consumption of the access node 100-A while the access node 100-C was in the energy saving mode with $C_{A\text{-}CES}$, and the energy consumption of the access node 100-A while the access node 100-C was not in the energy saving mode with $C_{A\text{-}CNES}$, the energy saving associated with switching of the access node 100-C to the energy saving mode could be determined as

$$ES_C = (C_{C\text{-}NES} - C_{C\text{-}ES}) - (C_{A\text{-}CNES} - C_{A\text{-}CES}). \tag{2}$$

Accordingly, corresponding energy saving information may be evaluated individually for each access node 100-B, 100-C for which the access node 100-A controls switching to the energy saving mode.

As further illustrated, the access node 100-A is connected by an interface 60 to the management node 150. The interface 60 may for example correspond to a management interface as specified in 3GPP TS 32.101 V13.0.0 (2016-01), e.g., a management interface based on FTP (File Transfer Protocol). By sending corresponding management information via the interface 60, the management node 150 may configure the access node 100-A with respect to the control of switching of the access node 100-B or 100C to or from the energy saving mode. The management information may for example define load the above-mentioned load thresholds for switching the access node 100-B, 100-C to orfrom the energy saving mode. Further, the interface 60 may be utilized by the access node 100-A for sending energy saving information to the management node 150. The management node 150 may utilize the reported energy saving information for adjusting the management information provided to the access node 100-A. For this purpose, the management node 150 may also consider energy saving information reported for other access nodes. For example, when determining the management information for the access node 100-B, also the energy saving information for the access node 100-C could be considered. In some cases, the management node 150 may also consider energy saving information for access nodes not controlled by the access node 100-A. That is to say, the cellular radio network may include a plurality of access node systems similar to that of Fig. 1, in which one access node controls one or more further access nodes with respect to the switching to the energy saving mode, and the management node 150 could aggregate and consider the energy saving information for all these access nodes. Further, the access node 100-A could also locally utilize the determined energy saving information for adapting the control processes for switching the access node 100-B, 100-C to the energy saving mode.

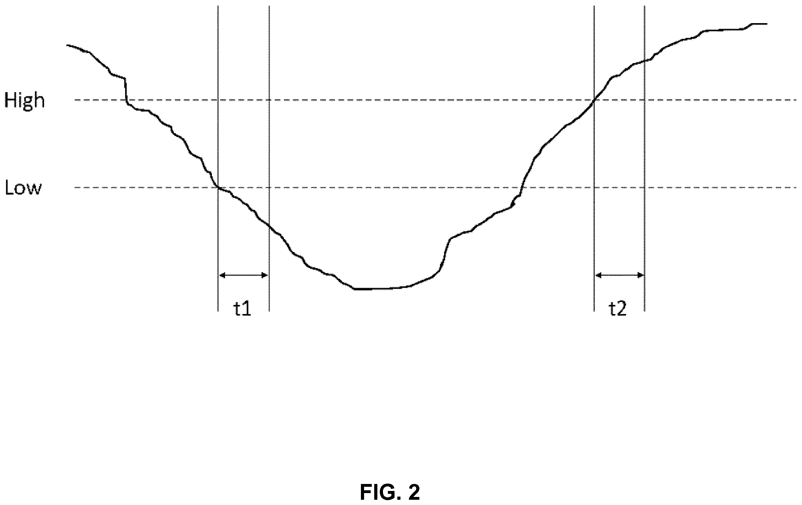

Fig. 2 shows a diagram for illustrating how the coverage access node 100-A may control the switching of the one of the capacity access nodes 100-B, 100-C to or from the energy saving mode. Specifically, Fig. 2 shows exemplary variations of the load of the access node 100-A over time. The load may for example by defined in terms of a load on one or more processors of the access node 100-A, a load on one or more interfaces of the coverage access node 100-A (e.g., load on a radio interface), or a combination of such loads. Further, Fig. 2 illustrates a high load threshold, designated by "High", and a low load threshold, designated by "Low". If the load remains under the "Low" load threshold for a time period of "t1" the coverage access node 100-A may take over traffic from the capacity access node 100-B, 100-C and thus switch the capacity access node 100-B, 100-C to the energy saving mode. After that, if the load remains over the "High" load threshold for a time period of "t2" the coverage access node 100-A may wake up the capacity access node 100-B, 100-C from the energy saving mode.

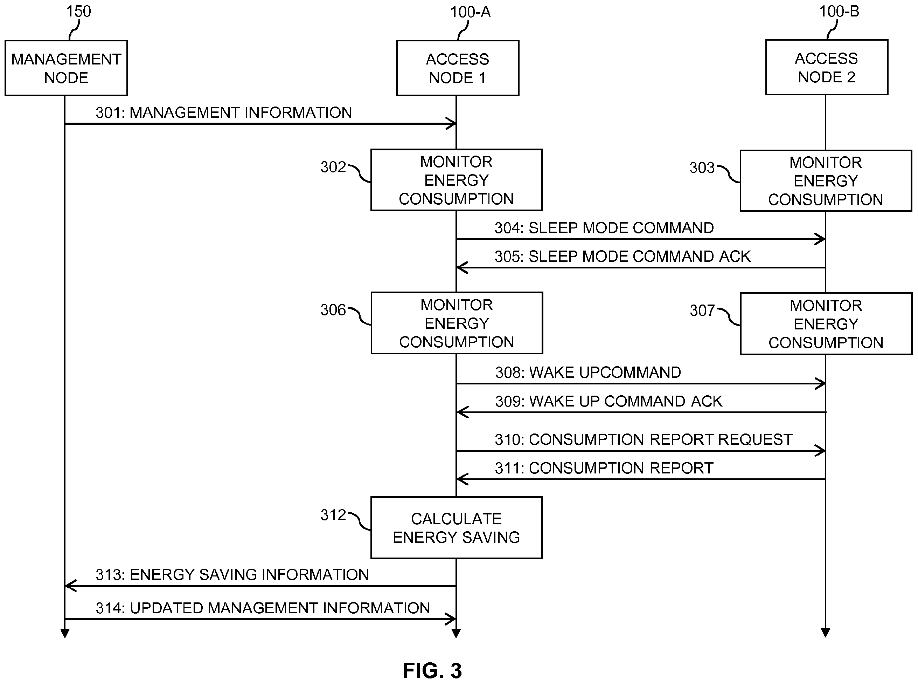

Fig. 3 shows exemplary processes based on the concepts as outlined above. The processes of Fig. 3 involve the access node 100-A, the access node 100-B, and the management node 150. It is to be understood that corresponding processes could also be implemented for the access node 100-C or any other access node which is controlled by the access node 100-A with respect to the switching to the energy saving mode.

In the processes of Fig. 3, the management node 150 initially sends management information 301 to the access node 100-A. Based on the management information, the access node 100-A then controls switching of the access node 100-B to or from the energy saving mode. This may for example be accomplished on the basis of comparing a load on the access node 100-A to load thresholds, such as explained in connection with Fig. 2. The management information could then for example defined the "High" and "Low" load thresholds and/or the time intervals t1 and t2. In the processes of Fig. 3, it is assumed that initially the access node 100-B is not in the energy saving mode.

As further illustrated by step 302, the access node 100-A monitors its own energy consumption. This may be accomplished on the basis of measurements by the energy meter 110-A associated with the access node 100-A. Similarly, the access node 100-B monitors its own energy consumption. This may be accomplished on the basis of measurements by the energy meter 110-B associated with the access node 100-B, as illustrated by step 303.

At some point, the access node 100-A decides to switch the access node 100-B to the energy saving mode, e.g., based on the load on the access node 100-B having dropped below the "Low" threshold. Accordingly, the access node 100-A sends a sleep mode command 304 to the access node 100-B. The sleep mode command 304 triggers switching of the access node 100-B to the energy saving mode. The access node 100-B may confirm switching to the energy saving mode by responding with a sleep mode acknowledgement (ACK) 305 to the access node 100-A.

As further illustrated by step 306, the access node 100-A continues to monitor its own energy consumption while the access node 100-B is in the energy saving mode. As indicated by step 307 the monitoring of the energy consumption of the access node 100-B continues as well. Since the access node 100-B is in the energy saving mode, and most functionalities of the access node 100-B are deactivated, the energy meter 110-B associated with the access node 100-B may autonomously measure the energy consumption while the access node 100-B is in the energy saving mode, store the measurement results, and indicate the measure energy consumption to the access node 100-B when the access node 100-B wakes up from the energy saving mode. If the energy meter 110-B is implemented as an internal component of the access node 100-B, the energy meter 110-B may be excluded from deactivation in the energy saving mode.

At some point, the access node 100-A decides to switch the access node 100-B back from the energy saving mode to normal operation, e.g., based on the load on the access node 100-A having increased above the "High" threshold. Accordingly, the access node 100-A sends a wake up command 308 to the access node 100-B. The wake up command 308 causes the access node 100-B to leave the energy saving mode. The access node 100-B may confirm leaving of the energy saving mode by responding with a wake up command acknowledgement 309 to the access node 100-A.

As further illustrated, the access node 100-B may then send a consumption report request 310 to the access node 100-B, and the access node 100-B may respond with a consumption report 311 indicating the energy consumption of the access node 100-B while the access node 100-B was in the energy saving mode and the energy consumption of the access node 100-B while the access node 100-B was not in the energy saving mode. Both contributions to the energy consumption may be distinguished, e.g., indicated as separate values, in the consumption report.

It is noted that the consumption report 311 could also be transmitted without request from the access node 100-A. Further, the consumption report 311 could be included in one or more other messages. For example, the energy consumption while the access node 100-B was not in the energy saving mode could be included in the sleep mode command acknowledgement 305 and the energy consumption while the access node 100-B was in the sleep mode could be included in the wake up command acknowledgement 309.

At step 312, the access node 100-A calculates the energy saving associated with the switching of the access node 100-B to the energy saving mode. This is accomplished based on the energy consumption of the access node 100-B as indicated by the consumption report 311 and based on the energy consumption of the access node 100-A as monitored at steps 302 and 306. For example, the energy saving could be calculated using relation (1).

The access node 100-A then sends energy saving information 313 indicating the calculated energy saving to the management node 150. This reporting may be performed in a regular manner or in response to certain triggering events, e.g., in response to newly calculating the energy saving for the access node 100-B or some other access node. The energy saving information 313 may also aggregate energy savings of multiple access nodes.

Based on the received energy saving information, the management node 150 may determine updated management information 314 which is then sent to the access node 100-A. The access node 100-A then applies the updated management information for controlling switching of the access node 100-B to or from the energy saving mode.

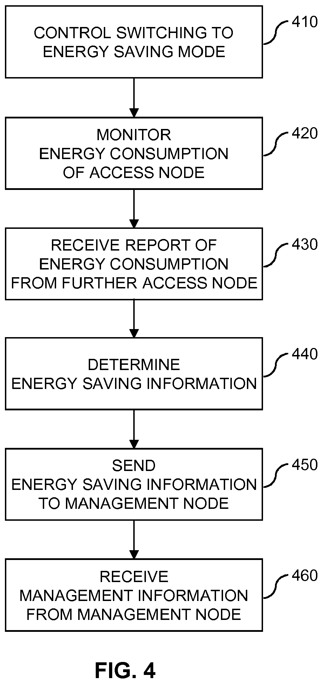

Fig. 4 shows a flowchart for illustrating a method of managing a cellular radio network. The method may be utilized for implementing the illustrated concepts in an access node which controls switching of one or more other access nodes to an energy saving mode, such as the access node 100-A. If a processor-based implementation of the access node is used, the steps of the method may be performed by one or more processors of the access node. In such a case the access node may further comprise a memory in which program code or other information for implementing the below described functionalities is stored.

At step 410, the access node controls switching of a further access node, such as the access node 100-B or 100-C to an energy saving mode. In the energy saving mode certain functionalities of the further access node, such as radio functionalities, are deactivated. A coverage area controlled by the further access node may be at least partially overlapped by a coverage area controlled by the access node, e.g., as explained above for the coverage areas 10-A and 10-B or for the coverage areas 10-A and 10-C. The control procedures of step 410 may involve switching the further access node from normal operation to the energy saving mode and/or switching the further access node from the energy saving mode to normal operation. For controlling the switching of the further access node to the energy saving mode, the access node may send control information to the further access node, such as the sleep mode command 304 or the wake up command 308 of Fig. 3.

At step 420, the access node monitors energy consumption of the access node, i.e., monitors its own energy consumption. The monitored energy consumption of the access node may be based on measurements performed by an energy meter associated with the access node, such as the energy meter 110-A. The energy meter may correspond an external device coupled by an interface to the access node. Alternatively, the energy meter may correspond to an internal component of the access node. The energy meter may measure the energy consumption on a main power input of the access node. This main power input may correspond to an AC mains input. However, the energy meter could also measure the energy consumption on a DC voltage input of the access node.

The energy consumption of the access node monitored at step 420 may comprise energy consumption of the access node while the further access node was in the energy saving mode. Further, the energy consumption of the access node monitored at step 420 may comprise energy consumption of the access node while the further access node was not in the energy saving mode.

At step 430, the access node receives a report from the further access node. The report may be received via an interface connecting the access node and the further access node, e.g., an X2 interface of the LTE technology. The above-mentioned interfaces 50-B and 50-C are examples of such interface. The report indicates energy consumption of the further access node. The above-mentioned consumption report 311 is an example of the report as received at step 430.

The energy consumption of the further access node may be based on measurements performed by an energy meter associated with the further access node, such as the energy meter 110-B. The energy meter may correspond an external device coupled by an interface to the further access node. Alternatively, the energy meter may correspond to an internal component of the further access node. The energy meter may measure the energy consumption on a main power input of the further access node. This main power input may correspond to an AC mains input. However, the energy meter could also measure the energy consumption on a DC voltage input of the further access node.

The energy consumption of the further access node indicated by the report comprises energy consumption of the further access node while the further access node was in the energy saving mode. Further, the energy consumption of the further access node indicated by the report may comprise energy consumption of the further access node while the further access node was not in the energy saving mode.

At step 440, the access node determines energy saving information representing energy saving associated with said switching of the further access node to the energy saving mode. This is accomplished based on the energy consumption of the access node as monitored at step 420 and the energy consumption of the further access node as indicated in the report received at step 430.

At optional step 450, the access node may send the determined energy saving information to a management node of the cellular radio network, e.g., to the above-mentioned management node 150. This may be accomplished via a management interface connecting the access node to the management node, e.g., a management interface as specified in 3GPP TS 32.101 V13.0.0. The above-mentioned interface 60 is an example of such management interface. The above mentioned energy saving information 313 is an example of the energy saving information sent at step 450.

At optional step 460, the access node may receive management information from the management node. Based on the management information, the access node may then control the switching of the further access node to the energy saving mode. For example, the management information may define one or more thresholds for controlling the switching to or from the energy saving mode, such as the above-mentioned load thresholds.

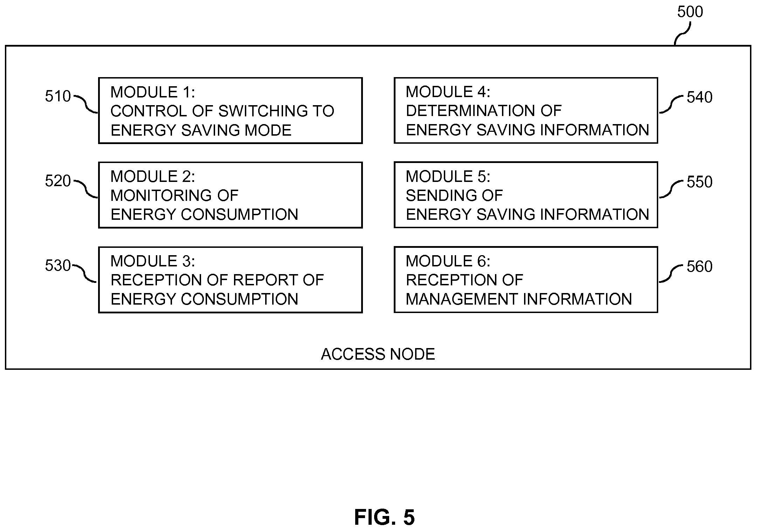

Fig. 5 shows a block diagram for illustrating functionalities of an access node 500 which operates according to the method of Fig. 4. As illustrated, the access node 500 may be provided with a module 510 configured to control switching of a further access node to an energy saving mode, such as explained in connection with step 410. Further, the access node 500 may be provided with a module 520 configured to monitor energy consumption of the access node, such as explained in connection with step 520. Further, the access node 500 may be provided with a module 530 configured to receive a report of energy consumption from the further access node, such as explained in connection with step 430. Further, the access node 500 may be provided with a module 540 configured to determine energy saving information based on the monitored energy consumption of the access node and the reported energy consumption of the further access node, such as explained in connection with step 440. Further, the radio device 500 may optionally be provided with a module 550 configured to send the energy saving information to a management node, such as explained in connection with step 450. Further, the radio device 500 may optionally be provided with a module 560 configured to receive management information from a management node, such as explained in connection with step 460.

It should be understood that the access node 500 may also include further modules for implementing other functionalities, such as functionalities for controlling connections to radio devices or transfer of data on such connections, and that the modules of the access node 500 do not necessarily represent a hardware structure of the access node 500, but may also correspond to functional elements, e.g., implemented by hardware, software, or a combination thereof.

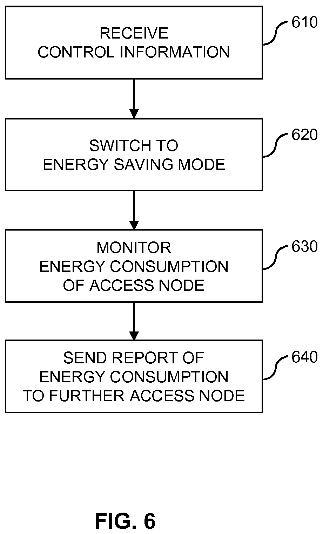

Fig. 6 shows a flowchart for illustrating a method of managing a cellular radio network. The method may be utilized for implementing the illustrated concepts in an access node which is controlled by a further access node with respect to switching to an energy saving mode. The above-mentioned access nodes 100-B and 100-C, which are controlled by the access node 100-A, are examples of such controlled access nodes. If a processor-based implementation of the access node is used, the steps of the method may be performed by one or more processors of the access node. In such a case the access node may further comprise a memory in which program code or other information for implementing the below described functionalities is stored.

At step 610, the access node receives control information from the further access node. The control information has the purpose of controlling the switching of the access node to the energy saving mode. The sleep mode command 304 or the wake up command 308 of Fig. 3 are examples of such control information.

At step 620, the access node switches to an energy saving mode. This is accomplished based on the control information. In the energy saving mode certain functionalities of the access node, such as radio functionalities, are deactivated. A coverage area controlled by the access node may be at least partially overlapped by a coverage area controlled by the further access node, e.g., as explained above for the coverage areas 10-A and 10-B or for the coverage areas 10-A and 10-C. The procedures of step 620 may involve switching the access node from normal operation to the energy saving mode and/or switching the access node from the energy saving mode to normal operation.

At step 630, the access node monitors energy consumption of the access node, i.e., monitors its own energy consumption. The monitored energy consumption of the access node may be based on measurements performed by an energy meter associated with the access node, such as the energy meter 110-B or 110-C. The energy meter may correspond an external device coupled by an interface to the access node. Alternatively, the energy meter may correspond to an internal component of the access node. The energy meter may measure the energy consumption on a main power input of the access node. This main power input may correspond to an AC mains input. However, the energy meter could also measure the energy consumption on a DC voltage input of the access node.

The energy consumption of the access node monitored at step 630 comprises energy consumption of the access node while the access node was in the energy saving mode. Further, the energy consumption of the access node monitored at step 420 may comprise energy consumption of the access node while the access node was not in the energy saving mode.

At step 640, the access node sends a report to the further access node. The report indicates the energy consumption of the access node as monitored at step 630. The report may be sent via an interface connecting the access node and the further access node, e.g., an X2 interface of the LTE technology. The above-mentioned interfaces 50-B and 50-C are examples of such interface. The above-mentioned consumption report 311 is an example of the report as sent at step 640.

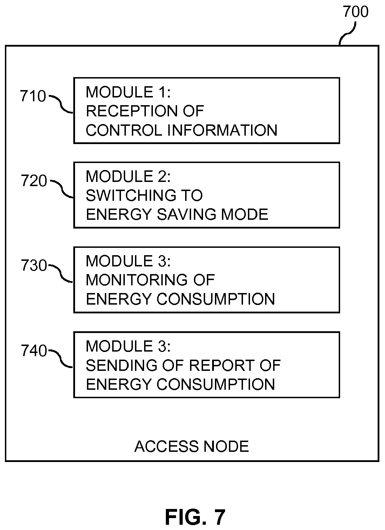

Fig. 7 shows a block diagram for illustrating functionalities of an access node 700 which operates according to the method of Fig. 6. As illustrated, the access node 700 may be provided with a module 710 configured to receive control information from a further access node, such as explained in connection with step 610. Further, the access node 700 may be provided with a module 720 configured to, based on the received control information, switch to an energy saving mode, such as explained in connection with step 620. Further, the access node 700 may be provided with a module 730 configured to monitor energy consumption of the access node, such as explained in connection with step 630. Further, the access node 700 may be provided with a module 740 configured to send a report of the monitored energy consumption to the further access node, such as explained in connection with step 640.

It should be understood that the access node 700 may also include further modules for implementing other functionalities, such as functionalities for controlling connections to radio devices or transfer of data on such connections, and that the modules of the access node 700 do not necessarily represent a hardware structure of the access node 700, but may also correspond to functional elements, e.g., implemented by hardware, software, or a combination thereof.

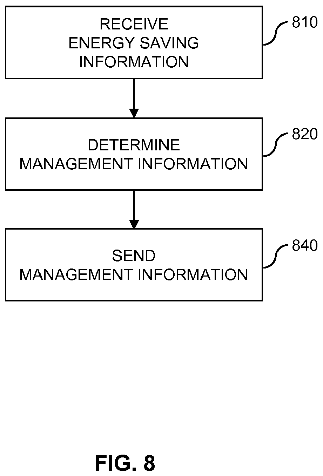

Fig. 8 shows a flowchart for illustrating a method of managing a cellular radio network. The method may be utilized for implementing the illustrated concepts in a management node which is responsible for managing an access node which controls switching of one or more other access nodes to an energy saving mode, such as the management node 150 which is responsible for managing the access node 100-A. If a processor-based implementation of the management node is used, the steps of the method may be performed by one or more processors of the management node. In such a case the management node may further comprise a memory in which program code or other information for implementing the below described functionalities is stored.

At step 810, the management node receives energy saving information from the access node. The access node is configured to control switching of a further access node to an energy saving mode. A coverage area controlled by the further access node may be at least partially overlapped by a coverage area controlled by the access node, e.g., as explained above for the coverage areas 10-A and 10-B or for the coverage areas 10-A and 10-C. The control procedure may involve switching the further access node from normal operation to the energy saving mode and/or switching the further access node from the energy saving mode to normal operation.

The energy saving information represents energy saving associated with said switching of the further access node to the energy saving mode. The energy saving information may be based on energy consumption of the access node and energy consumption of the further access node.

The energy consumption of the access node may include energy consumption of the access node while the further access node was in the energy saving mode. Further, the energy consumption of the access node may include energy consumption of the access node while the further access node was not in the energy saving mode. The energy consumption of the access node may be based on measurements performed by an energy meter associated with the access node, e.g., by the above-mentioned energy meter 110-A.

The energy consumption of the further access node may include energy consumption of the further access node while the further access node was in the energy saving mode. Further, the energy consumption of the further access node may include energy consumption of the further access node while the further access node was not in the energy saving mode. The energy consumption of the further access node may be based on measurements performed by an energy meter associated with the further access node, e.g., by the above-mentioned energy meter 110-B or 110-C.

The above mentioned energy saving information 313 is an example of the energy saving information received at step 810.

At optional step 820, the management node may determine management information and, at optional step 830, send the management information to the access node. The management information has the purpose of controlling the switching of the further access node to the energy saving mode. For example, the management information may define one or more thresholds for controlling the switching to or from the energy saving mode, such as the above-mentioned load thresholds. An example of such management information is the above-mentioned management information 301 or the above-mentioned management information 314. The management node determine the management information based on the received energy saving information.

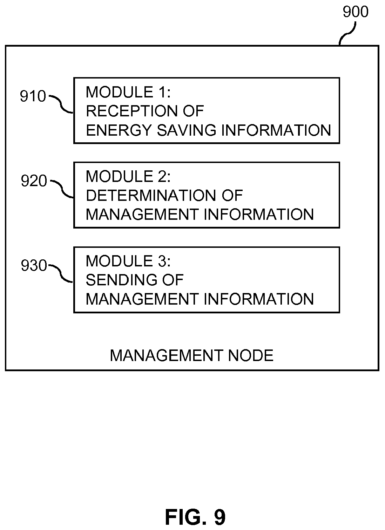

Fig. 9 shows a block diagram for illustrating functionalities of a management node 900 which operates according to the method of Fig. 8. As illustrated, the management node 900 may be provided with a module 910 configured to receive energy saving information from an access node, such as explained in connection with step 810. Further, the management node 900 may optionally be provided with a module 920 configured to determine management information based on the received energy saving information, such as explained in connection with step 820. Further, the management node 900 may be provided with a module 930 configured to send the management information to the access node, such as, such as explained in connection with step 830.

It should be understood that the management node 900 may also include further modules for implementing other functionalities, such as functionalities for managing other functionalities of access nodes, and that the modules of the management node 900 do not necessarily represent a hardware structure of the management node 900, but may also correspond to functional elements, e.g., implemented by hardware, software, or a combination thereof.

It is to be understood that the methods of Figs. 4 and 6 could also be combined in a system comprising an access node operating according to the method of Fig. 4 and a further access node operating according to the method of Fig. 6. In such system, the further access node in the method of Fig. 4 would correspond to the access node in the method of Fig. 6, and the further access node in the method of Fig. 6 would correspond to the access node in the method of Fig. 4. Such system may also further include a management node operating according to the method of Fig. 8.

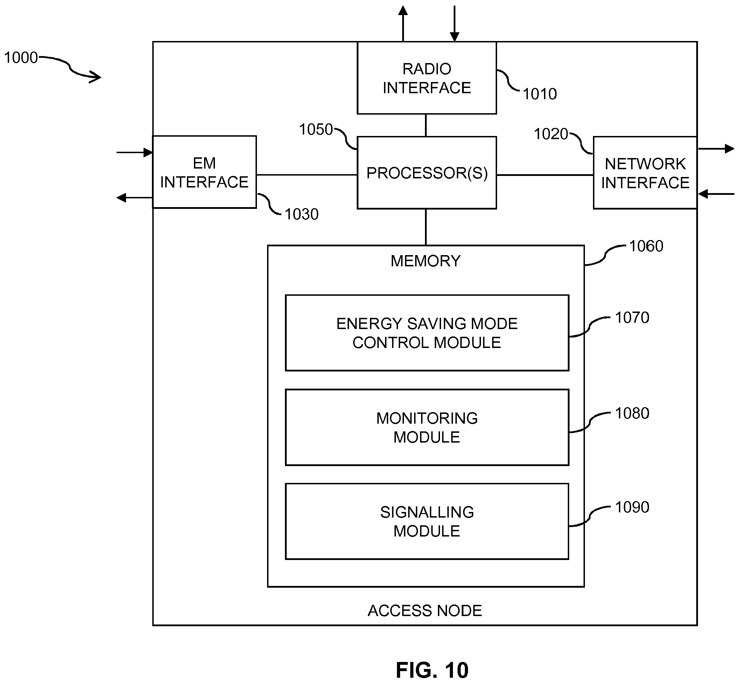

Fig. 10 illustrates exemplary structures which may be used for implementing the above concepts in an access node 1000, such as one of the access nodes 100-A, 100-B, 100-C. The access node 1000 may for example correspond to a base station of a cellular radio network, such as an eNB of the LTE technology.

As illustrated, the access node 1000 may include a radio interface 1010 for establishing connections of radio devices to the access node. If the access node corresponds to an eNB of the LTE technology, the radio interface 1010 may for example implement the Uu radio interface of the LTE technology. Further, the access node 1000 may include a network interface 1020 for connecting to other nodes of the cellular radio network, such as other access nodes or a management node. If the access node corresponds to an eNB of the LTE technology, the radio interface 1010 may for example implement the X2 interface of the LTE technology. Further, the network interface 1020 could implement a management interface as for example specified in 3GPP TS 32.101 V13.0.0. Further, the access node 1000 may include an energy meter (EM) interface 1030 for coupling to an external energy meter, such as one of the above-mentioned energy meters 110-A, 110-B, 110-C.

Further, the access node 1000 may include one or more processors 1050 coupled to the interfaces 1010, 1020, 1030, and a memory 1060 coupled to the processor(s) 1050. The memory 1060 may include a Read Only Memory (ROM), e.g., a flash ROM, a Random Access Memory (RAM), e.g., a Dynamic RAM (DRAM) or Static RAM (SRAM), a mass storage, e.g., a hard disk or solid state disk, or the like. The memory 1060 includes suitably configured program code to be executed by the processor(s) 1050 so as to implement the above-described functionalities of an access node. In particular, the memory 1060 may include various program code modules for causing the access node 1000 to perform processes as described above, e.g., corresponding to the method steps of Fig. 4 or of Fig. 6.

As illustrated, the memory 1060 may include an energy saving mode control module 1070 for controlling switching to the energy saving mode. If the access node 1000 implements functionalities corresponding to the method steps of Fig. 4, i.e., of a "controlling" access node, the energy saving mode control module 1070 may implement the functionalities for switching another, "controlled" access node to the energy saving mode, e.g., by sending corresponding control information, such as explained in connection with step 410. If the access node 1000 implements functionalities corresponding to the method steps of Fig. 6, i.e., of a "controlled" access node, the energy saving mode control module 1070 may implement the functionalities for switching the access node itself to the energy saving mode, based on corresponding control information received from a further, "controlling" access node, such as explained in connection with step 620.

Further, the memory 1080 may include a monitoring module 1080 for implementing the above-described functionalities of monitoring energy consumption of the access node, such as explained in connection with step 420 of Fig. 4 or step 630 of Fig. 6.

Further, the memory 1060 may also include a signalling module 1090 for implementing the above-described functionalities of receiving or sending the report of energy consumption, receiving or sending the control information, sending the energy saving information, or receiving the management information, such as explained in connection with steps 430, 450, or 460 of Fig. 4 or steps 610 or 640 of Fig. 6.

It is to be understood that the structures as illustrated in Fig. 10 are merely schematic and that the access node 1000 may actually include further components which, for the sake of clarity, have not been illustrated, e.g., further interfaces or processors. Also, it is to be understood that the memory 1060 may include further types of program code modules, which have not been illustrated, e.g., program code modules for implementing known functionalities of an eNB or other type of access node. According to some embodiments, also a computer program may be provided for implementing functionalities of the access node 1000, e.g., in the form of a physical medium storing the program code and/or other data to be stored in the memory 1060 or by making the program code available for download or by streaming.

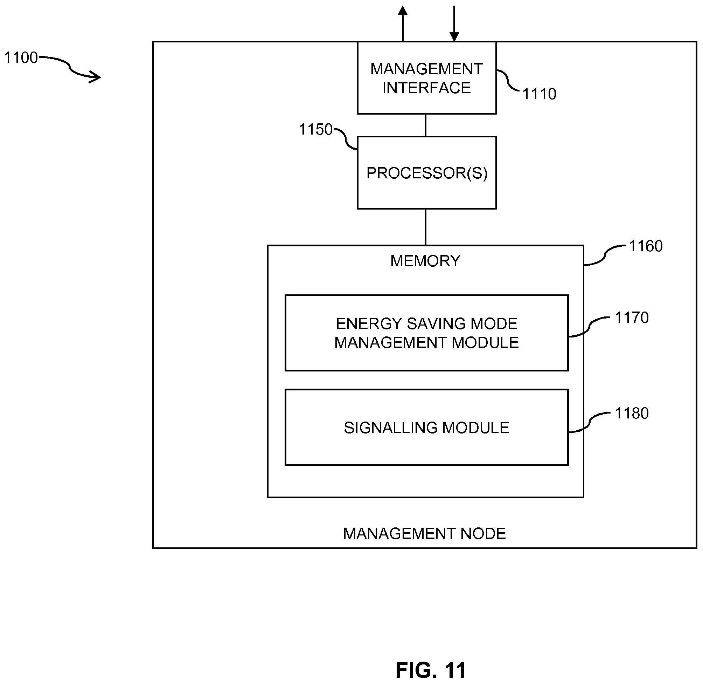

Fig. 11 illustrates exemplary structures which may be used for implementing the above concepts in a management node 1100 of a cellular radio network. The management node 1000 may for example implement an NMS, OSS, or similar type of management system.

As illustrated, the management node 1100 may include a management interface 1110 for management of nodes of the cellular radio network, in particular for management of access nodes of the cellular radio network. The management interface 1110 may for example implement a management interface as specified in 3GPP TS 32.101 V13.0.0.

Further, the management node 1100 may include one or more processors 1150 coupled to the management interface 1110, and a memory 1160 coupled to the processor(s) 1150. The memory 1160 may include a ROM, e.g., a flash ROM, a RAM, e.g., a DRAM or SRAM, a mass storage, e.g., a hard disk or solid state disk, or the like. The memory 1160 includes suitably configured program code to be executed by the processor(s) 1150 so as to implement the above-described functionalities of a management node. In particular, the memory 1160 may include various program code modules for causing the management node 1100 to perform processes as described above, e.g., corresponding to the method steps of Fig. 8.

As illustrated, the memory 1160 may include an energy saving management module 1070 for implementing the above-described functionalities of managing energy saving functionalities of access nodes, e.g., by determining management information, such as described in connection with step 820 of Fig. 8. Further, the memory 1160 may include a signalling module 1180 for implementing the above-described functionalities of receiving the energy saving information, such as explained in connection with step 830 of Fig. 8, or functionalities of sending the management information, such as explained in connection with step 830 of Fig. 8.

It is to be understood that the structures as illustrated in Fig. 11 are merely schematic and that the management node 1100 may actually include further components which, for the sake of clarity, have not been illustrated, e.g., further interfaces or processors. Also, it is to be understood that the memory 1160 may include further types of program code modules, which have not been illustrated, e.g., program code modules for implementing known functionalities of an NMS, OSS, or similar management system. According to some embodiments, also a computer program may be provided for implementing functionalities of the management node 1100, e.g., in the form of a physical medium storing the program code and/or other data to be stored in the memory 1160 or by making the program code available for download or by streaming.

As can be seen, the concepts as described above may be used for efficiently managing a cellular radio network with respect to switching access nodes to an energy saving mode. In particular, the actual impact on energy saving associated with switching of certain access nodes to the energy saving mode may be considered in a dynamic and adaptive manner.

It is to be understood that the examples and embodiments as explained above are merely illustrative and susceptible to various modifications. For example, the illustrated concepts may be applied in connection with various cellular radio technologies and with respect to arbitrary number of controlled or controlling access nodes. Further, various algorithms may be applied for controlling the switching to the energy saving mode, without limitation to load based algorithms as described above. Moreover, it is to be understood that the above concepts may be implemented by using correspondingly designed software to be executed by one or more processors of an existing device, or by using dedicated device hardware. Further, it should be noted that the illustrated nodes may each be implemented as a single device or as a system of multiple interacting devices.

**Claims**

**1.** A method of managing a cellular radio network, the method comprising:

an access node (100-A; 500; 1000) controlling switching of a further access node (100-B, 100-C; 700; 1000) to an energy saving mode;

the access node (100-A; 500; 1000) monitoring energy consumption of the access node (100-A; 500; 1000);

the access node (100-A; 500; 1000) receiving a report from the further access node (100-B, 100-C; 700; 1000), the report indicating energy consumption of the further access node (100-B, 100-C; 700; 1000) while the further access node (100-B, 100-C; 700; 1000) was in the energy saving mode; and

based on the monitored energy consumption of the access node (100-A; 500; 1000) and the indicated energy consumption of the further access node (100-B, 100-C; 700; 1000), the access node (100-A; 500; 1000) determining energy saving information representing energy saving associated with said switching of the further access node (100-B, 100-C; 700; 1000) to the energy saving mode.

2. The method according to claim 1, comprising:
the access node (100-A; 500; 1000) sending the determined energy saving information to a management node (150; 900; 1100) of the cellular radio network.

3. The method according to claim 2, comprising:

the access node (100-A; 500; 1000) receiving management information from the management node (150; 900; 1100); and

based on the management information, the access node controlling said switching of the further access node (100-B, 100-C; 700; 1000) to the energy saving mode.

4. The method according to any one of the preceding claims,
wherein the the report further indicates energy consumption of the further access node (100-B, 100-C; 700; 1000) while the further access node (100-B, 100-C; 700; 1000) was not in the energy saving mode.

5. The method according to any one of the preceding claims,
wherein the monitored energy consumption of the access node (100-A; 500; 1000) comprises energy consumption of the access node (100-A; 500; 1000) while the further access node (100-B, 100-C; 700; 1000) was in the energy saving mode.

6. The method according to any one of the preceding claims,
wherein the monitored energy consumption of the access node (100-A; 500; 1000) comprises energy consumption of the access node (100-A; 500; 1000) while the further access node (100-B, 100-C; 700; 1000) was not in the energy saving mode.

7. The method according to any one of the preceding claims,
wherein the energy consumption of the further access node (100-B, 100-C; 700; 1000) indicated by the report is based on measurements performed by an energy meter (110-B, 110-C) associated with the further access node (100-B, 100-C; 700; 1000).

8. The method according to any one of the preceding claims,
wherein the monitored energy consumption of the access node (100-A; 500; 1000) is based on measurements performed by an energy meter (110-A) associated with the access node (100-A; 500; 1000).

9. The method according to any one of the preceding claims,
wherein a coverage area (10-B, 10-C) controlled by the further access node (100-B, 100-C; 700; 1000) is at least partially overlapped by a coverage area (10-A) controlled by the access node (100-A; 500; 1000).

10. The method according to any one of the preceding claims, comprising:

the further access node (100-B, 100-C; 700; 1000) receiving control information from the access node (100-A; 500; 1000);

based on the control information, the further access node (100-B, 100-C; 700; 1000) switching to the energy saving mode;

the further access node (100-B, 100-C; 700; 1000) monitoring energy consumption of the further access node (100-B, 100-C; 700; 1000); and

the further access node (100-B, 100-C; 700; 1000) sending the report to the access node (100-A; 500; 1000), the report indicating the monitored energy consumption of the further access node (100-B, 100-C; 700; 1000).

**11.** An access node (100-A; 500; 1000) for a cellular radio network,
the access node (100-A; 500; 1000) being configured to:

- control switching of a further access node (100-B, 100-C; 700; 1000) to an energy saving mode;
- monitor energy consumption of the access node (100-A; 500; 1000);
- receive a report from the further access node (100-B, 100-C; 700; 1000), the report indicating energy consumption of the further access node (100-B, 100-C; 700; 1000) while the further access node (100-B, 100-C; 700; 1000) was in the energy saving mode; and
- based on the monitored energy consumption of the access node (100-A; 500; 1000) and the indicated energy consumption of the further access node (100-B, 100-C; 700; 1000), determine energy saving information representing energy saving associated with said switching of the further access node (100-B, 100-C; 700; 1000) to the energy saving mode.

**12.** The access node (100-A; 500; 1000) according to claim 11,
wherein the access node (100-A; 500; 1000) is configured to perform the steps of a method according to any one of claims 2 to 9.

**13.** A system comprising:

an access node (100-A; 500; 1000) and a further access node (100-B, 100-C; 700; 1000) for a cellular radio network,
the access node (100-A; 500; 1000) being configured to:

- control switching of the further access node (100-B, 100-C; 700; 1000) to an energy saving mode;
- monitor energy consumption of the access node (100-A; 500; 1000);
- receive a report from the further access node (100-B, 100-C; 700; 1000), the report indicating energy consumption of the further access node (100-B, 100-C; 700; 1000) while the further access node (100-B, 100-C; 700; 1000) was in the energy saving mode; and
- based on the monitored energy consumption of the access node (100-A; 500; 1000) and the indicated energy consumption of the further access node (100-B, 100-C; 700; 1000), determine energy saving information representing energy saving associated with said switching of the further access node (100-B, 100-C; 700; 1000) to the energy saving mode; and

the further access node (100-B, 100-C; 700; 1000) being configured to:

- receive control information from the access node (100-A; 500; 1000),
- based on the control information, switch to or from the energy saving mode;
- monitor energy consumption of the further access node (100-B, 100-C; 700; 1000); and
- send the report to the access node (100-A; 500; 1000), the report indicating the monitored energy consumption of the further access node (100-B, 100-C; 700; 1000) while the further access node was in the energy saving mode.

**14.** The system according to claim 13,
wherein the access node (100-A, 500; 1000) is configured to perform the steps of a method according to any one of claims 2 to 9.

**15.** A computer program or computer program product comprising program code to be executed by at least one processor (850) of an access node (100-A; 500; 1000) for a cellular radio network, wherein execution of the program code causes the access node (100-A; 500; 1000) to perform steps of a method according to any one of claims 1 to 9.

**Patentansprüche**

**1.** Verfahren zur Verwaltung eines zellularen Funknetzwerks, wobei das Verfahren umfasst, dass:

ein Zugangsknoten (100-A; 500; 1000) ein Wechseln eines weiteren Zugangsknotens (100-B, 100-C; 700; 1000) in einen Energiesparmodus steuert;
der Zugangsknoten (100-A; 500; 1000) einen Energieverbrauch des Zugangsknotens (100-A; 500; 1000) überwacht;

der Zugangsknoten (100-A; 500; 1000) eine Meldung vom weiteren Zugangsknoten (100-B, 100-C; 700; 1000) empfängt, wobei die Meldung den Energieverbrauch des weiteren Zugangsknotens (100-B, 100-C; 700; 1000) angibt, während der weitere Zugangsknoten (100-B, 100-C; 700; 1000) im Energiesparmodus war; und

der Zugangsknoten (100-A; 500; 1000) basierend auf dem überwachten Energieverbrauch des Zugangsknotens (100-A; 500; 1000) und dem angegebenen Energieverbrauch des weiteren Zugangsknotens (100-B, 100-C; 700; 1000) Energiesparinformationen bestimmt, die eine Energieeinsparung darstellen, die mit dem Wechseln des weiteren Zugangsknotens (100-B, 100-C; 700; 1000) in den Energiesparmodus assoziiert ist.

2. Verfahren nach Anspruch 1, umfassend, dass:
der Zugangsknoten (100-A; 500; 1000) die bestimmten Energiesparinformationen an einen Verwaltungsknoten (150; 900; 1100) des zellularen Funknetzwerks sendet.

3. Verfahren nach Anspruch 2, umfassend, dass:

der Zugangsknoten (100-A; 500; 1000) Verwaltungsinformationen vom Verwaltungsknoten (150; 900; 1100) empfängt; und
der Zugangsknoten das Wechseln des weiteren Zugangsknotens (100-B, 100-C; 700; 1000) in den Energiesparmodus basierend auf den Verwaltungsinformationen steuert.

4. Verfahren nach einem der vorhergehenden Ansprüche,
wobei die Meldung ferner einen Energieverbrauch des weiteren Zugangsknotens (100-B, 100-C; 700; 1000) angibt, während der weitere Zugangsknoten (100-B, 100-C; 700; 1000) nicht im Energiesparmodus war.

5. Verfahren nach einem der vorhergehenden Ansprüche,
wobei der überwachte Energieverbrauch des Zugangsknotens (100-A; 500; 1000) einen Energieverbrauch des Zugangsknotens (100-A; 500; 1000) umfasst, während der weitere Zugangsknoten (100-B, 100-C; 700; 1000) im Energiesparmodus war.

6. Verfahren nach einem der vorhergehenden Ansprüche,
wobei der überwachte Energieverbrauch des Zugangsknotens (100-A; 500; 1000) einen Energieverbrauch des Zugangsknotens (100-A; 500; 1000) umfasst, während der weitere Zugangsknoten (100-B, 100-C; 700; 1000) nicht im Energiesparmodus war.

7. Verfahren nach einem der vorhergehenden Ansprüche,
wobei der durch die Meldung angegebene Energieverbrauch des weiteren Zugangsknotens (100-B, 100-C; 700; 1000) auf Messungen basiert, die durch ein Energiemessgerät (110-B, 110-C) durchgeführt werden, das mit dem weiteren Zugangsknoten (100-B, 100-C; 700; 1000) assoziiert ist.

8. Verfahren nach einem der vorhergehenden Ansprüche,
wobei der überwachte Energieverbrauch des Zugangsknotens (100-A; 500; 1000) auf Messungen basiert, die durch ein Energiemessgerät (110-A) durchgeführt werden, das mit dem Zugangsknoten (100-A; 500; 1000) assoziiert ist.

9. Verfahren nach einem der vorhergehenden Ansprüche,
wobei ein Versorgungsgebiet (10-B, 10-C), das vom weiteren Zugangsknoten (100-B, 100-C; 700; 1000) gesteuert wird, wenigstens teilweise durch ein Versorgungsgebiet (10-A) überlappt wird, das vom Zugangsknoten (100-A; 500; 1000) gesteuert wird.

10. Verfahren nach einem der vorhergehenden Ansprüche, umfassend, dass:

der weitere Zugangsknoten (100-B, 100-C; 700; 1000) Steuerinformationen vom Zugangsknoten (100-A; 500; 1000) empfängt;
der weitere Zugangsknoten (100-B, 100-C; 700; 1000) basierend auf den Steuerinformationen in den Energiesparmodus wechselt;
der weitere Zugangsknoten (100-B, 100-C; 700; 1000) einen Energieverbrauch des weiteren Zugangsknotens (100-B, 100-C; 700; 1000) überwacht; und
der weitere Zugangsknoten (100-B, 100-C; 700; 1000) die Meldung an den Zugangsknoten (100-A; 500; 1000) sendet, wobei die Meldung den überwachten Energieverbrauch des weiteren Zugangsknotens (100-B, 100-C;

700; 1000) angibt.

11. Zugangsknoten (100-A; 500; 1000) für ein zellulares Funknetzwerk,
    wobei der Zugangsknoten (100-A; 500; 1000) konfiguriert ist zum:

    - Steuern eines Wechselns eines weiteren Zugangsknotens (100-B, 100-C; 700; 1000) in einen Energiesparmodus;
    - Überwachen eines Energieverbrauchs des Zugangsknotens (100-A; 500; 1000);
    - Empfangen einer Meldung vom weiteren Zugangsknoten (100-B, 100-C; 700; 1000), wobei die Meldung den Energieverbrauch des weiteren Zugangsknotens (100-B, 100-C; 700; 1000) angibt, während der weitere Zugangsknoten (100-B, 100-C; 700; 1000) im Energiesparmodus war; und
    - Bestimmen von Energiesparinformationen, die eine Energieeinsparung darstellen, die mit dem Wechseln des weiteren Zugangsknotens (100-B, 100-C; 700; 1000) in den Energiesparmodus assoziiert ist, basierend auf dem überwachten Energieverbrauch des Zugangsknotens (100-A; 500; 1000) und dem angegebenen Energieverbrauch des weiteren Zugangsknotens (100-B, 100-C; 700; 1000) .

12. Zugangsknoten (100-A; 500; 1000) nach Anspruch 11, wobei der Zugangsknoten (100-A; 500; 1000) zum Ausführen der Schritte eines Verfahrens nach einem der Ansprüche 2 bis 9 konfiguriert ist.

13. System, umfassend:

    einen Zugangsknoten (100-A; 500; 1000) und einen weiteren Zugangsknoten (100-B, 100-C; 700; 1000) für ein zellulares Funknetzwerk;
    wobei der Zugangsknoten (100-A; 500; 1000) konfiguriert ist zum:

    - Steuern eines Wechselns des weiteren Zugangsknotens (100-B, 100-C; 700; 1000) in einen Energiesparmodus;
    - Überwachen eines Energieverbrauchs des Zugangsknotens (100-A; 500; 1000);
    - Empfangen einer Meldung vom weiteren Zugangsknoten (100-B, 100-C; 700; 1000), wobei die Meldung den Energieverbrauch des weiteren Zugangsknotens (100-B, 100-C; 700; 1000) angibt, während der weitere Zugangsknoten (100-B, 100-C; 700; 1000) im Energiesparmodus war; und
    - Bestimmen von Energiesparinformationen, die eine Energieeinsparung darstellen, die mit dem Wechseln des weiteren Zugangsknotens (100-B, 100-C; 700; 1000) in den Energiesparmodus assoziiert ist, basierend auf dem überwachten Energieverbrauch des Zugangsknotens (100-A; 500; 1000) und dem angegebenen Energieverbrauch des weiteren Zugangsknotens (100-B, 100-C; 700; 1000); und

    wobei der weitere Zugangsknoten (100-B, 100-C; 700; 1000) konfiguriert ist zum:

    - Empfangen von Steuerinformationen vom Zugangsknoten (100-A; 500; 1000),
    - Wechseln in den oder aus dem Energiesparmodus basierend auf den Steuerinformationen;
    - Überwachen eines Energieverbrauchs des weiteren Zugangsknotens (100-B, 100-A; 700; 1000); und
    - Senden der Meldung an den Zugangsknoten (100-A; 500; 1000), wobei die Meldung den überwachten Energieverbrauch des weiteren Zugangsknotens (100-B, 100-C; 700; 1000) angibt, während der weitere Zugangsknoten im Energiesparmodus war.

14. System nach Anspruch 13,
    wobei der Zugangsknoten (100-A; 500; 1000) zum Ausführen der Schritte eines Verfahrens nach einem der Ansprüche 2 bis 9 konfiguriert ist.

15. Computerprogramm, oder Computerprogrammprodukt, umfassend Programmcode, der durch mindestens einen Prozessor (850) eines Zugangsknotens (100-A; 500; 1000) für ein zellulares Netzwerk ausgeführt werden soll, wobei die Ausführung des Programmcodes den Zugangsknoten (100-A; 500; 1000) zum Ausführen von Schritten eines Verfahrens nach einem der Ansprüche 1 bis 9 veranlasst.

**Revendications**

1. Procédé de gestion d'un réseau radio cellulaire, le procédé comprenant :

par un noeud d'accès (100-A ; 500 ; 1000), la commande d'une commutation d'un autre noeud d'accès (100-B ; 100-C ; 700 ; 1000) dans un mode d'économie d'énergie ;

par le noeud d'accès (100-A ; 500 ; 1000), la surveillance d'une consommation d'énergie du noeud d'accès (100-A ; 500 ; 1000) ;

par le noeud d'accès (100-A ; 500 ; 1000), la réception d'un rapport en provenance de l'autre noeud d'accès (100-B ; 100-C ; 700 ; 1000), le rapport indiquant une consommation d'énergie de l'autre noeud d'accès (100-B ; 100-C ; 700 ; 1000) pendant que l'autre noeud d'accès (100-B ; 100-C ; 700 ; 1000) était dans le mode d'économie d'énergie ; et

sur la base de la consommation d'énergie surveillée du noeud d'accès (100-A ; 500 ; 1000) et de la consommation d'énergie indiquée de l'autre noeud d'accès (100-B ; 100-C ; 700 ; 1000), par le noeud d'accès (100-A ; 500 ; 1000), la détermination d'informations d'économie d'énergie représentant une économie d'énergie associée à ladite commutation de l'autre noeud d'accès (100-B ; 100-C ; 700 ; 1000) dans le mode d'économie d'énergie.

2. Procédé selon la revendication 1, comprenant :
par le noeud d'accès (100-A ; 500 ; 1000), l'envoi des informations d'économie d'énergie déterminées à un noeud de gestion (150 ; 900 ; 1100) du réseau radio cellulaire.

3. Procédé selon la revendication 2, comprenant :

par le noeud d'accès (100-A ; 500 ; 1000), la réception d'informations de gestion en provenance du noeud de gestion (150 ; 900 ; 1100) ; et
sur la base des informations de gestion, par le noeud d'accès, la commande de ladite commutation de l'autre noeud d'accès (100-B ; 100-C ; 700 ; 1000) dans le mode d'économie d'énergie.

4. Procédé selon l'une quelconque des revendications précédentes,
dans lequel le rapport indique en outre une consommation d'énergie de l'autre noeud d'accès (100-B ; 100-C ; 700 ; 1000) pendant que l'autre noeud d'accès (100-B ; 100-C ; 700 ; 1000) n'était pas dans le mode d'économie d'énergie.

5. Procédé selon l'une quelconque des revendications précédentes,
dans lequel la consommation d'énergie surveillée du noeud d'accès (100-A ; 500 ; 1000) comprend une consommation d'énergie du noeud d'accès (100-A ; 500 ; 1000) pendant que l'autre noeud d'accès (100-B ; 100-C ; 700 ; 1000) était dans le mode d'économie d'énergie.

6. Procédé selon l'une quelconque des revendications précédentes,
dans lequel la consommation d'énergie surveillée du noeud d'accès (100-A ; 500 ; 1000) comprend une consommation d'énergie du noeud d'accès (100-A ; 500 ; 1000) pendant que l'autre noeud d'accès (100-B ; 100-C ; 700 ; 1000) n'était pas dans le mode d'économie d'énergie.

7. Procédé selon l'une quelconque des revendications précédentes,
dans lequel la consommation d'énergie de l'autre noeud d'accès (100-B ; 100-C ; 700 ; 1000) indiquée par le rapport est basée sur des mesures effectuées par un compteur d'énergie (110-B, 110-C) associé à l'autre noeud d'accès (100-B ; 100-C ; 700 ; 1000).

8. Procédé selon l'une quelconque des revendications précédentes,
dans lequel la consommation d'énergie surveillée du noeud d'accès (100-A ; 500 ; 1000) est basée sur des mesures effectuées par un compteur d'énergie (110-A) associé au noeud d'accès (100-A ; 500 ; 1000).

9. Procédé selon l'une quelconque des revendications précédentes,
dans lequel une zone de couverture (10-B, 10-C) commandée par l'autre noeud d'accès (100-B ; 100-C ; 700 ; 1000) est au moins partiellement chevauchée par une zone de couverture (10-A) commandée par le noeud d'accès (100-A ; 500 ; 1000).

10. Procédé selon l'une quelconque des revendications précédentes, comprenant :

par l'autre noeud d'accès (100-B ; 100-C ; 700 ; 1000), la réception d'informations de commande en provenance du noeud d'accès (100-A ; 500 ; 1000) ;
sur la base des informations de commande, par l'autre noeud d'accès (100-B ; 100-C ; 700 ; 1000), la commutation dans le mode d'économie d'énergie ;

par l'autre noeud d'accès (100-B ; 100-C ; 700 ; 1000), la surveillance d'une consommation d'énergie de l'autre noeud d'accès (100-B ; 100-C ; 700 ; 1000) ; et

par l'autre noeud d'accès (100-B ; 100-C ; 700 ; 1000), l'envoi du rapport au noeud d'accès (100-A ; 500 ; 1000), le rapport indiquant la consommation d'énergie surveillée de l'autre noeud d'accès (100-B ; 100-C ; 700 ; 1000).

11. Noeud d'accès (100-A ; 500 ; 1000) pour un réseau radio cellulaire, le noeud d'accès (100-A ; 500 ; 1000) étant configuré pour :

- la commande d'une commutation d'un autre noeud d'accès (100-B ; 100-C ; 700 ; 1000) dans un mode d'économie d'énergie ;
- la surveillance d'une consommation d'énergie du noeud d'accès (100-A ; 500 ; 1000) ;
- la réception d'un rapport en provenance de l'autre noeud d'accès (100-B ; 100-C ; 700 ; 1000), le rapport indiquant une consommation d'énergie de l'autre noeud d'accès (100-B ; 100-C ; 700 ; 1000) pendant que l'autre noeud d'accès (100-B ; 100-C ; 700 ; 1000) était dans le mode d'économie d'énergie ; et
- sur la base de la consommation d'énergie surveillée du noeud d'accès (100-A ; 500 ; 1000) et de la consommation d'énergie indiquée de l'autre noeud d'accès (100-B ; 100-C ; 700 ; 1000), la détermination d'informations d'économie d'énergie représentant une économie d'énergie associée à ladite commutation de l'autre noeud d'accès (100-B ; 100-C ; 700 ; 1000) dans le mode d'économie d'énergie.

12. Noeud d'accès (100-A ; 500 ; 1000) selon la revendication 11,
dans lequel le noeud d'accès (100-A ; 500 ; 1000) est configuré pour effectuer les étapes d'un procédé selon l'une quelconque des revendications 2 à 9.

13. Système comprenant :

un noeud d'accès (100-A ; 500 ; 1000) et un autre noeud d'accès (100-B ; 100-C ; 700 ; 1000) pour un réseau radio cellulaire,
le noeud d'accès (100-A ; 500 ; 1000) étant configuré pour :

- la commande d'une commutation de l'autre noeud d'accès (100-B ; 100-C ; 700 ; 1000) dans un mode d'économie d'énergie ;
- la surveillance d'une consommation d'énergie du noeud d'accès (100-A ; 500 ; 1000) ;
- la réception d'un rapport en provenance de l'autre noeud d'accès (100-B ; 100-C ; 700 ; 1000), le rapport indiquant une consommation d'énergie de l'autre noeud d'accès (100-B ; 100-C ; 700 ; 1000) pendant que l'autre noeud d'accès (100-B ; 100-C ; 700 ; 1000) était dans le mode d'économie d'énergie ; et
- sur la base de la consommation d'énergie surveillée du noeud d'accès (100-A ; 500 ; 1000) et de la consommation d'énergie indiquée de l'autre noeud d'accès (100-B ; 100-C ; 700 ; 1000), la détermination d'informations d'économie d'énergie représentant une économie d'énergie associée à ladite commutation de l'autre noeud d'accès (100-B ; 100-C ; 700 ; 1000) dans le mode d'économie d'énergie ; et

l'autre noeud d'accès (100-B ; 100-C ; 700 ; 1000) étant configuré pour :

- la réception d'informations de commande en provenance du noeud d'accès (100-A ; 500 ; 1000) ;
- sur la base des informations de commande, la commutation dans le mode d'économie d'énergie ou hors de celui-ci ;
- la surveillance d'une consommation d'énergie de l'autre noeud d'accès (100-B ; 100-C ; 700 ; 1000) ; et
- l'envoi du rapport au noeud d'accès (100-A ; 500 ; 1000), le rapport indiquant la consommation d'énergie surveillée de l'autre noeud d'accès (100-B ; 100-C ; 700 ; 1000) pendant que l'autre noeud d'accès était dans le mode d'économie d'énergie.

14. Système selon la revendication 13,
dans lequel le noeud d'accès (100-A ; 500 ; 1000) est configuré pour effectuer les étapes d'un procédé selon l'une quelconque des revendications 2 à 9.

15. Programme informatique ou produit de programme informatique comprenant un code de programme à exécuter par au moins un processeur (850) d'un noeud d'accès (100-A ; 500 ; 1000) pour un réseau radio cellulaire, dans lequel une exécution du code de programme amène le noeud d'accès (100-A ; 500 ; 1000) à effectuer des étapes d'un procédé selon l'une quelconque des revendications 1 à 9.

**FIG. 1**

EP 3 409 052 B1

FIG. 2

FIG. 3

```
                    ┌─────────────────────────┐
                    │   CONTROL SWITCHING TO  │  ⟍ 410
                    │    ENERGY SAVING MODE   │
                    └─────────────────────────┘
                                 │
                                 ▼
                    ┌─────────────────────────┐
                    │        MONITOR          │  ⟍ 420
                    │  ENERGY CONSUMPTION     │
                    │     OF ACCESS NODE      │
                    └─────────────────────────┘
                                 │
                                 ▼
                    ┌─────────────────────────┐
                    │    RECEIVE REPORT OF     │  ⟍ 430
                    │   ENERGY CONSUMPTION     │
                    │ FROM FURTHER ACCESS NODE │
                    └─────────────────────────┘
                                 │
                                 ▼
                    ┌─────────────────────────┐
                    │       DETERMINE          │  ⟍ 440
                    │ ENERGY SAVING INFORMATION│
                    └─────────────────────────┘
                                 │
                                 ▼
                    ┌─────────────────────────┐
                    │         SEND             │  ⟍ 450
                    │ ENERGY SAVING INFORMATION│
                    │    TO MANAGEMENT NODE    │
                    └─────────────────────────┘
                                 │
                                 ▼
                    ┌─────────────────────────┐
                    │        RECEIVE           │  ⟍ 460
                    │ MANAGEMENT INFORMATION   │
                    │  FROM MANAGEMENT NODE    │
                    └─────────────────────────┘
```

**FIG. 4**

500

| | |
|---|---|
| 510 — MODULE 1:<br>CONTROL OF SWITCHING TO<br>ENERGY SAVING MODE | MODULE 4:<br>DETERMINATION OF<br>ENERGY SAVING INFORMATION — 540 |
| 520 — MODULE 2:<br>MONITORING OF<br>ENERGY CONSUMPTION | MODULE 5:<br>SENDING OF<br>ENERGY SAVING INFORMATION — 550 |
| 530 — MODULE 3:<br>RECEPTION OF REPORT OF<br>ENERGY CONSUMPTION | MODULE 6:<br>RECEPTION OF<br>MANAGEMENT INFORMATION — 560 |

ACCESS NODE

**FIG. 5**

```
┌─────────────────────────┐
│         RECEIVE         │──── 610
│   CONTROL INFORMATION   │
└─────────────────────────┘
            │
            ▼
┌─────────────────────────┐
│        SWITCH TO        │──── 620
│    ENERGY SAVING MODE   │
└─────────────────────────┘
            │
            ▼
┌─────────────────────────┐
│         MONITOR         │──── 630
│    ENERGY CONSUMPTION   │
│      OF ACCESS NODE     │
└─────────────────────────┘
            │
            ▼
┌─────────────────────────┐
│     SEND REPORT OF      │──── 640
│    ENERGY CONSUMPTION   │
│  TO FURTHER ACCESS NODE │
└─────────────────────────┘
```

**FIG. 6**

**FIG. 7**

FIG. 8

900

| |
|---|
| 910 → MODULE 1:<br>RECEPTION OF<br>ENERGY SAVING INFORMATION |
| 920 → MODULE 2:<br>DETERMINATION OF<br>MANAGEMENT INFORMATION |
| 930 → MODULE 3:<br>SENDING OF<br>MANAGEMENT INFORMATION |
| MANAGEMENT NODE |

**FIG. 9**

**FIG. 10**

```
                    ↑       ↓
        ┌─────────────────────────────────────┐
1100 ⟍ →  │   ┌──────────────┐                  │
        │   │  MANAGEMENT   │                  │
        │   │  INTERFACE    │⟍1110             │
        │   └──────────────┘                  │
        │   1150⟍  ┌──────────────┐            │
        │         │ PROCESSOR(S) │            │
        │         └──────────────┘            │
        │         ┌──────────────────────┐⟍1160│
        │         │       MEMORY         │     │
        │         │ ┌──────────────────┐⟍1170 │
        │         │ │ ENERGY SAVING MODE│     │
        │         │ │ MANAGEMENT MODULE │     │
        │         │ └──────────────────┘     │
        │         │ ┌──────────────────┐⟍1180 │
        │         │ │ SIGNALLING MODULE │     │
        │         │ └──────────────────┘     │
        │         └──────────────────────┘     │
        │           MANAGEMENT NODE            │
        └─────────────────────────────────────┘
```

**FIG. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2787777 A1

**Non-patent literature cited in the description**

- *3GPP TS 36.423 V13.2.0,* December 2015

- *3GPP TS 32.101 V13.0.0,* January 2016